# EUROPÄISCHE PATENTANMELDUNG

(11) **EP 4 848 664 A1**
(43) Veröffentlichungstag der Anmeldung: **02.12.2026**
(21) Anmeldenummer: 25178709.9
(22) Anmeldetag: 26.05.2025
(51) Int. Cl.: H04L 12/10

(54) **VERFAHREN ZUR ENERGIE- UND DATENÜBERTRAGUNG ZWISCHEN EINEM EINSPEISEPUNKT UND ZUMINDEST EINEM VERBRAUCHER, SCHALTUNGSAUFBAU ZUR ENERGIE- UND DATENÜBERTRAGUNG ZWISCHEN EINEM EINSPEISEPUNKT UND ZUMINDEST EINEM VERBRAUCHER UND OPERATIONS- ODER UNTERSUCHUNGSLEUCHTE**

(71) Anmelder: Digital Elektronik GmbH, 5083 St. Leonhard/Salzburg (AT)
(72) Erfinder: Steinbacher, Andreas, 5082 Grödig (AT); Embacher, Markus, 5082 Grödig (AT)
(74) Vertreter: Karakatsanis, Georgios

(57) **Zusammenfassung**

Es wird ein Verfahren zur Energie- und Datenübertragung zwischen einem Einspeisepunkt und zumindest einem Verbraucher vorgeschlagen, im Rahmen dessen über eine Strecke definierter Länge, elektrische Nutzleistung, die 60 W übersteigt, über eine Datenleitung einer Ethernetverbindung mit einem Adernpaar und einer beliebigen Übertragungsrate übertragen wird. Der Schaltungsaufbau zur Durchführung des Verfahrens umfasst ein erstes Schaltungsteil (1) und ein zweites Schaltungsteil (2), mit jeweils einem positiven und einem negativen Anschluss (3, 4), wobei das erste Schaltungsteil (1) eine Energiequelle und einen PSE-PHY (5) und das zweite Schaltungsteil zumindest einen Verbraucher (6) und einen PD-PHY (7) umfasst, wobei der PSE-PHY (5) und der PD-PHY (7) zum Zweck der bidirektionalen Kommunikation als Sender und Empfänger ausgeführt sind, wobei die positiven und die negativen Anschlüsse (3, 4) des ersten und des zweiten Schaltungsteils (1, 2) jeweils über eine Ader einer Datenleitung einer Ethernetverbindung mit einem Adernpaar und einfache Steckverbinder oder Klemmen miteinander verbindbar sind.

## Beschreibung

Die vorliegende Erfindung bezieht sich auf ein Verfahren zur Energie- und Datenübertragung zwischen einem Einspeisepunkt und zumindest einem Verbraucher gemäß dem Oberbegriff des Patentanspruchs 1. Ferner bezieht sich die Erfindung auf einen Schaltungsaufbau zur Energie- und Datenübertragung zwischen einem Einspeisepunkt und zumindest einem Verbraucher, insbesondere zur Durchführung des erfindungsgemäßen Verfahrens. Zudem bezieht sich die Erfindung auf eine Operations- oder Untersuchungsleuchte mit einem Tragarm und einem Leuchtenkörper.

Operationsleuchten (im Folgenden OP-Leuchten genannt) und Untersuchungsleuchten sind aus dem Stand der Technik bekannt und werden in Operationssälen zur Ausleuchtung der zu operierenden bzw. der zu untersuchenden Körperregion des auf dem Operationstisch liegenden Patienten verwendet.

Im Operationsbereich werden Leistungen größer als 50W (Leistung definiert nach IEEE-Norm 802.3bu), bei einer Spannungsversorgung von z.B. 24V, 48V, 56V, ..., benötigt. Um dies zu erreichen, sind Ströme größer als 1.360 mA (Strom definiert nach IEEE-Norm 802.3bu) oder größer als 1.579 mA (Strom definiert nach IEEE-Norm 802.3cg) erforderlich.

Des Weiteren sollte eine möglichst große/ausreichende Datenübertragungsrate zur Übertragung von z.B. Videostreams, für die Sensorik, für die Kommunikation mit einem integrierten Computer (PC) oder Embedded Board oder zur Steuerung der Leuchte bereitgestellt werden, wobei die Übertragungsrate mindestens 10 Mbit/sec betragen sollte. Hierbei ist in nachteiliger Weise der zur Verfügung stehende Bauraum innerhalb der OP- oder Untersuchungsleuchte sehr begrenzt, da Bauelemente und Leiterplatten nicht beliebig groß ausgeführt werden können.

Aus dem Stand der Technik sind bei OP- und Untersuchungsleuchten Powerline-Lösungen bekannt, welche jedoch die notwendige Übertragungsrate für große Datenmengen nicht unterstützen können; die maximale Datenübertragungsrate beträgt 500kBit/sec, so dass z.B. Videosignale von OP- und Untersuchungsleuchten nicht übertragen werden können. Zudem ist eine Steuerung einer Operationsleuchte per Ethernet nicht möglich. Die Norm (IEEE-Norm 802.3cg) definiert für PoDL eine maximale Leistung von 52W bei einer Streckenlänge von 300m.

Der Transport großer Datenmengen in oder aus einer OP- oder Untersuchungsleuchte ist bisher mit erheblichem technischem und finanziellem Aufwand verbunden. Beispielsweise ist bekannt, zur Videoübertragung separate, im Tragarm der Leuchte angebrachte Datenleitungen zu verwenden, auf denen proprietäre Kommunikation umgesetzt wird. Dies erfordert in nachteiliger Weise Bauraum für die zu diesem Zweck erforderliche, teure zusätzliche Schleifkontakte (in der Regel werden vier zusätzliche Schleifkontakte benötigt). Ferner ist bekannt, eine Echtzeit-Videoübertragung in HD über eine Funkverbindung (WLAN) zu realisieren, was sich jedoch als störanfällig erweist.

Zum Erzielen einer hohen Übertragungsrate ist bekannt, Single Pair Ethernet zu implementieren, welches eine Ethernetverbindung und somit Datenübertragung über eine Datenleitung mit einem Adernpaar ermöglicht, wodurch eine Datenübertragungsrate von bis zu 10 GB/s oder höher möglich ist.

Der vorliegenden Erfindung liegt die Aufgabe zugrunde, ausgehend vom bekannten Stand der Technik ein Verfahren zur Energie- und Datenübertragung zwischen einem Einspeisepunkt und zumindest einem Verbraucher anzugeben. Ferner soll ein Schaltungsaufbau zur Energie- und Datenübertragung zwischen einem Einspeisepunkt und zumindest einem Verbraucher, insbesondere zur Durchführung des erfindungsgemäßen Verfahrens angegeben werden. Eine weitere der Erfindung zugrundeliegende Aufgabe ist es, eine Operations- oder Untersuchungsleuchte mit zumindest einem einen Leuchtenkörper umfassenden Tragarm anzugeben.

Diese Aufgabe wird für ein Verfahren durch die Merkmale des Patentanspruchs 1 gelöst. Ein Schaltungsaufbau ist Gegenstand des Patentanspruchs 6, wobei eine Operations- oder Untersuchungsleuchte Gegenstand des Patentanspruchs 12 ist.

Weitere Ausgestaltungen und Vorteile gehen aus den entsprechenden Unteransprüchen hervor.

Demnach wird ein Verfahren zur Energie- und Datenübertragung zwischen einem Einspeisepunkt und zumindest einem Verbraucher vorgeschlagen, im Rahmen dessen, über eine Strecke definierter Länge, elektrische Nutzleistung, die 60 W übersteigt, über eine Datenleitung einer Ethernetverbindung mit einem Adernpaar und einer beliebigen Übertragungsrate übertragen wird. Die Datenleitung kann beliebig ausgeführt sein und benötigt lediglich ein Adernpaar; derartige Datenleitungen sind aus dem Stand der Technik bestens bekannt. Die Länge der Strecke ist vorzugsweise kleiner als 100 Meter und kann typischerweise 10 Meter betragen. Die Datenübertragung erfolgt auf der Bitübertragungsschicht nach dem OSi-Modell.

Die Datenübertragungsrate beträgt zwischen 1 Mbit/s und 10Gbit/s oder höher, wobei die übertragbare elektrische Nutzleistung 60 W übersteigt und beispielweise 120 W oder 150 W betragen kann.

Der zumindest eine Verbraucher kann eine OP-Leuchte, eine Untersuchungsleuchte, ein Monitor oder ein medizinisches Gerät oder eine in eine OP-Leuchte, eine Untersuchungsleuchte, einen Monitor oder ein medizinisches Gerät integrierte Komponente sein.

Zur Energie- und Datenübertragung zwischen einem Einspeisepunkt und zumindest einem Verbraucher können die Verbraucher nach dem Punkt-zu-Punkt-Kommunikation-Prinzip geschaltet sein und sich zur Energie- und Datenübertragung eine Datenleitung einer Ethernetverbindung mit einem Adernpaar teilen.

Gemäß einer weiteren Ausgestaltung des erfindungsgemäßen Verfahrens, zur Energie- und Datenübertragung zwischen einem Einspeisepunkt und mehreren Verbrauchern können die Verbraucher nach dem Punkt-zu-Mehrpunkt-Kommunikation-Prinzip (MultiDrop) über jeweils einen Konnektor auf einer Leitung parallel geschaltet sein und sich zur Energie- und Datenübertragung eine Datenleitung einer Ethernetverbindung mit einem Adernpaar teilen.

Gemäß der Erfindung wird zudem ein Schaltungsaufbau zur Energie- und Datenübertragung zwischen einem Einspeisepunkt und zumindest einem Verbraucher, insbesondere zur Durchführung des erfindungsgemäßen Verfahrens vorgeschlagen, welcher ein erstes Schaltungsteil und ein zweites Schaltungsteil, mit jeweils einem positiven und einem negativen Anschluss umfasst, wobei das erste Schaltungsteil eine Energiequelle und einen PSE (Power Supply Equipment)-PHY (physische Schnittstelle mit einem integrierten Schaltkreis zur Kodierung und Dekodierung von Daten) mit Zusatzbeschaltung und das zweite Schaltungsteil zumindest einen Verbraucher und einen PD (Powered Device)-PHY mit Zusatzbeschaltung umfasst, wobei der PSE-PHY und der PD-PHY zum Zweck der bidirektionalen Kommunikation als Sender und Empfänger ausgeführt sind. Die Bandbreite bei der Datenübertragung liegt nach Standard (IEEE802.3) zwischen 20MHz und 600MHz. Hierbei sind erfindungsgemäß die positiven und die negativen Anschlüsse des ersten und des zweiten Schaltungsteils jeweils über eine Ader einer Datenleitung einer Ethernetverbindung mit einem Adernpaar und einfache Steckverbinder oder Klemmen miteinander verbindbar.

Die Datensignale werden je nach Kommunikationsrichtung an einem Schaltungsteil empfangen, verarbeitet und durch den jeweiligen PHY in ein SPE (Single Pair Ethernet) -konformes Format umgewandelt.

Hierbei weist gemäß einer Ausgestaltung der Erfindung das erste Schaltungsteil für jeden Anschluss zum Koppeln & Entkoppeln der Datensignale einen dem PSE-PHY vorgeschalteten Kondensator oder Übertrager auf, welcher die hochfrequenten Anteile der Datenübertragung passieren lässt und die niederfrequenten und Gleichspannungs-Anteile blockiert, wobei jedem der Kondensatoren oder Übertrager optional eine Transient Blocking Unit (TBU-Strombegrenzer) oder ein weitere geeignete Komponente vorgeschaltet ist, die als Strombegrenzer dient, welche bei normalen Betriebsbedingungen eine sehr niedrige Impedanz aufweist und den Stromfluss nicht beeinflusst, wobei wenn ein Überstromereignis erkannt wird, der Strombegrenzer in einen hochohmigen Zustand schaltet, wodurch der Stromfluss unterbrochen wird und der nachgeschaltete PSE-PHY geschützt wird. Die Verwendung von Übertragern zum Koppeln und Entkoppeln der Datensignale resultiert in einer besseren funktionalen Sicherheit gegen Überspannung, wobei zudem in vorteilhafter Weise bei einigen Ausgestaltungen weniger Platz auf der entsprechenden Platine benötigt wird. Beispielhafte Ausgestaltungen zur Veranschaulichung der Verwendung von Übertragern sind der nachfolgenden Figurenbeschreibung zu entnehmen.

Ferner können optional mehrere TVS-Dioden (Suppressordioden) vorgesehen sein, welche in Serie zwischen den Leitungen zum Verbinden der Anschlüsse des Schaltungsaufbaus mit dem PSE-PHY und vor den Kondensatoren oder Übertragern geschalten sind; die TVS-Dioden werden leitend, wenn eine Spannungsschwelle (Durchbruchspannung) überschritten wird und der durch die Spannungsspitze verursachter Strom wird durch Parallelschaltung an dem zu schützenden Bauteil vorbei geführt. Wenn ein Überspannungsereignis die Durchbruchspannung einer TVS-Diode übersteigt, klemmt die TVS-Diode die Spannung, wodurch der nachgeschaltete PSE-PHY geschützt wird. Wenn Transient Blocking Units vorgesehen sind, sind die TVS-Dioden - falls vorgesehen - in Serie zwischen den Leitungen zum Verbinden der Anschlüsse des Schaltungsaufbaus mit dem PSE-PHY in einem Bereich zwischen den Kondensatoren und den Transient Blocking Units geschalten.

Zur Bereitstellung der Leistung umfasst das erste Schaltungsteil ein Schaltnetzteil, welches eine Wechselspannung in eine Gleichspannung umwandelt; beispielsweise wird eine 230VAC Wechselspannung in eine 24VDC/48VDC/56VDC/ ... Gleichspannung umgewandelt. Schaltnetzteile erzeugen die Ausgangsspannung (z.B. 230VAC → 24VDC/48VDC/56VDC/ ...) durch schnelles Schalten. Dies führt zu hochfrequenter Welligkeit (Rippel) in der Ausgangsspannung, welche die Funktion der angeschlossenen Elektronik beeinträchtigen können. Erfindungsgemäß sind mehrere, dem Schaltnetzteil nachgeschaltete, parallelgeschaltete Kondensatoren vorgesehen, welche der Glättung der Ausgangsspannung und der Dämpfung hochfrequenter Störungen zur Lieferung einer gleichmäßigen DC-Spannung für die Datenleitungen dienen, wobei die Kondensatoren unterschiedliche Kapazitäten aufweisen, um Störungen über verschiedene Frequenzbereiche und über ein breiteres Frequenzspektrum hinweg zu unterdrücken. Beispielsweise können drei Kondensatoren mit unterschiedlichen Kapazitäten (z.B. 100nF, 10nF und 1nF) vorgesehen sein.

Zum Koppeln der bereitgestellten Leistung auf die Datenleitungen umfasst das erste Schaltungsteil eine jedem Anschluss zugeordnete Spule, welche niederfrequente und Gleichspanungs-Signalanteile passieren lässt und hochfrequente Anteile dämpft, den dem Schaltnetzteil nachgeschalteten, parallelgeschalteten Kondensatoren nachgeschaltet ist und mit der jeweiligen Leitung zum Verbinden der Anschlüsse des Schaltungsaufbaus mit dem PSE-PHY in einem Bereich zwischen dem dem PSE-PHY vorgeschalteten Kondensator oder Übertrager und dem jeweiligen Anschluss des ersten Schaltungsteils und falls TVS-Dioden vorgesehen sind, in einem Bereich zwischen der jeweiligen TVS-Diode und dem jeweiligen Anschluss des ersten Schaltungsteils verbunden ist. Die Spulen sind derart dimensioniert, dass eine elektrische Nutzleistung, die 60 W übersteigt und beispielsweise 120 Watt betragen kann, übertragbar ist.

Demnach ist gemeinsam mit den dem PSE-PHY vorgeschalteten Kondensatoren oder Übertrager sichergestellt, dass es zu keinen gegenseitigen Störungen bzw. Beeinflussungen zwischen dem Schaltnetzteil und dem PSE-PHY kommen kann, da alle hochfrequenten Anteile, nämlich die Datensignale, von den Induktivitäten blockiert werden und nicht zum Schaltnetzteil gelangen und alle niederfrequenten Anteile, nämlich Strom und Spannung von den Kondensatoren oder Übertragern blockiert werden und nicht zum PSE-PHY gelangen. Somit erfolgt eine Überlagerung der Datensignale und des Leistungsanteils auf dem gemeinsamen Leitungspaar, wodurch sowohl die Datenkommunikation als auch die Energieübertragung über dieselben Adern der Datenleitung ermöglicht wird.

Erfindungsgemäß entspricht der Aufbau des zweiten Schaltungsteils dem Aufbau des ersten Schaltungsteils, mit dem Unterschied, dass anstelle des PSE-PHY ein PD-PHY vorgesehen ist und das zweite Schaltungsteil anstelle des Schaltnetzteils zumindest einen Verbraucher umfasst, welcher die vom ersten Schaltungsteil bereitgestellte Nutzleistung empfängt und wobei die Spulen derart dimensioniert sind, dass auch elektrische Nutzleistung, die 60 W übersteigt, übertragbar ist; die elektrische Nutzleistung kann beispielsweise 120 W betragen.

Ein vom ersten Schaltungsteil gesendetes Signal wird am zweiten Schaltungsteil empfangen, wobei zuerst die übertragene Nutzleistung durch die beiden Spulen entkoppelt wird, um den zumindest einen Verbraucher mit der notwendigen Energie versorgen zu können. Die dem zumindest einem Verbraucher vorgeschalteten, parallelgeschalteten Kondensatoren glätten dabei wiederum eine auftretende Ripple-Spannung und entkoppeln auftretende Störungen zur Lieferung einer gleichmäßigen DC-Spannung für den zu versorgenden Verbraucher.

Das Datensignal wird durch die dem PD-PHY vorgeschalteten Kondensatoren oder Übertrager entkoppelt und kann anschließend vom PD-PHY empfangen, verarbeitet und z.B. in ein Ethernet konformes Format umgewandelt werden.

Bei der Kommunikation zwischen dem PSE-PHY und dem PD-PHY spielen auch weitere Faktoren, wie beispielsweise die Aushandlung der Übertragungsraten und - modi sowie die Clock-Synchronisation eine wichtige Rolle, was dem Fachmann bestens bekannt ist. Die Steuerung der PHYs kann dabei z.B. über digitale Schnittstellen (z.B. MII, RMII, RGMII, ...), einem Mikrocontroller, einem PC, usw. erfolgen.

Bei den Beispielen erfindungsgemäßer Ausgestaltungen eines Schaltungsaufbaus, welche detailliert in der nachfolgenden Figurenbeschreibung beschrieben werden, kann der zumindest eine Verbraucher ferner als OP- oder Untersuchungsleuchte mit einem Tragarm und einem Leuchtenkörper oder als in eine OP- oder Untersuchungsleuchte integrierte Komponente, beispielsweise eine Kamera, ein Embedded Board oder ein Monitor ausgeführt sein, wobei das erste Schaltungsteil vor oder in der mechanischen Aufhängung des Tragarms und das zweite Schaltungsteil im oder am Leuchtenkörper angeordnet ist und wobei gemäß der Erfindung die Verbindung der beiden Schaltungsteile miteinander bzw. die Verbindung zur Energie- und Datenübertragung über eine Datenleitung einer Ethernetverbindung mit einem Adernpaar und einfache Steckverbinder oder Klemmen durch den Tragarm erfolgt.

Bei einer OP- oder Untersuchungsleuchte mit mehreren Tragarmen, die jeweils einen Leuchtenkörper umfassen, ist gemäß einer ersten Ausgestaltung für jeden Tragarm ein erstes Schaltungsteil vor oder in der mechanischen Aufhängung des Tragarms und ein zweites Schaltungsteil im oder am Leuchtenkörper angeordnet, wobei die Verbindung der beiden Schaltungsteile miteinander bzw. die Verbindung zur Energie- und Datenübertragung über eine Datenleitung einer Ethernetverbindung mit einem Adernpaar und einfache Steckverbinder oder Klemmen durch den jeweiligen Tragarm erfolgt. Hierbei sind Datenübertragungsraten von bis zu 10 Gbit/s realisierbar.

Alternativ kann lediglich ein erstes Schaltungsteil in der mechanischen Aufhängung der Tragarme vorgesehen sein, welches nach dem Punkt-zu-Mehrpunkt-Kommunikation-Prinzip (MultiDrop) über jeweils einen Konnektor mit jeweils einem zweiten, in jedem Tragarm vorgesehenen zweiten Schaltungsteil verbunden ist, wobei die zweiten Schaltungsteile parallel geschaltet sind und sich zur Energie- und Datenübertragung eine Datenleitung einer Ethernetverbindung mit einem Adernpaar teilen. In vorteilhafter Weise wird hierbei lediglich ein erstes Schaltungsteil benötigt, um eine Strom- und Datenverbindung mit mehreren Leuchten zu realisieren. Hierbei sind Datenübertragungsraten von bis zu 10 Mbit/s realisierbar.

Gemäß der Erfindung wird eine OP- oder Untersuchungsleuchte mit zumindest einem einen Leuchtenkörper umfassenden Tragarm vorgeschlagen, bei der die Energie- und Datenübertragung zwischen einem Einspeisepunkt und sämtlicher Komponenten der OP- oder Untersuchungsleuchte gemäß dem erfindungsgemäßen Verfahren mittels eines Schaltungsaufbaus gemäß der Erfindung und einer Datenleitung einer Ethernetverbindung mit einem Adernpaar und einfache Steckverbinder oder Klemmen durch den Tragarm erfolgt; die übertragbare elektrische Nutzleistung übersteigt erfindungsgemäß 60 W bei einer Datenübertragungsrate zwischen 1 Mbit/s und 10Gbit/s oder höher, wobei gemäß einer Ausgestaltung der Erfindung die übertragbare elektrische Nutzleistung mindestens 120 W beträgt.

Im Rahmen einer vorteilhaften Ausgestaltung kann vorgesehen sein, dass in die OP- oder Untersuchungsleuchte als Komponenten Mittel zur Speicherung und zur Aufnahme und/oder zur Anzeige von Bild- und Videodaten integriert sind und/oder dass in die OP- oder Untersuchungsleuchte als Komponenten Mittel zur Speicherung und zur Aufnahme und/oder zum Abspielen von Audiodaten integriert sind. Hierbei sind über den Tragarm Audio, Bild- und Videodaten zwischen der OP- oder Untersuchungsleuchte und einem Netzwerkgerät, das beispielsweise als Ethernet-Switch, Router oder Gateway ausgeführt sein kann, bidirektional übertragbar. Ferner kann vorgesehen sein, dass Audio, Bild- und Videodaten mittels in der OP- oder Untersuchungsleuchte integrierter CPU und Speichermittel auswertbar sind. Ferner kann in der OP- oder Untersuchungsleuchte ein Ethernet Switch angeordnet sein, der als Anschluss für einen Computer (PC) oder ein Embedded Board und/oder weitere Komponenten dienen kann, wie beispielsweise Kameras oder Sensorik.

Durch die erfindungsgemäße Konzeption wird die bidirektionale Übertragung patienten- und/oder therapiebezogener Daten zwischen der OP- oder Untersuchungsleuchte und einem externen Computer sowie die Einbindung bildgebender Verfahren, beispielsweise zur Projektion und Visualisierung auf dem Patienten, zur Analyse etc. und die Stromversorgung einer Datenleitung einer Ethernetverbindung mit einem Adernpaar und einfache Steckverbinder oder Klemmen durch den Tragarm ermöglicht. Beispielsweise können MRI - Bilder auf den Patienten projiziert werden. Zudem kann über eine in die OP- oder Untersuchungsleuchte integrierte Kamera Al Unterstützung des Arztes, beispielsweise eines Chirurgen realisiert werden.

Erfindungsgemäß erfolgt die Energie- und Datenübertragung zwischen einem Einspeisepunkt und sämtlicher Komponenten der OP- oder Untersuchungsleuchte, beispielsweise der beschriebenen Komponenten, gemäß dem erfindungsgemäßen Verfahren mittels eines Schaltungsaufbaus gemäß der Erfindung und einer Datenleitung einer Ethernetverbindung mit einem Adernpaar und einfache Steckverbinder oder Klemmen durch den Tragarm. Im Vergleich zum Stand der Technik, wonach zur Datenübertragung separate, im Tragarm der OP- oder Untersuchungsleuchte angebrachte Datenleitungen und entsprechende zusätzliche Schleifkontakte verwendet werden, resultiert die erfindungsgemäße Konzeption in einer signifikanten Bauraum- und Kostenersparnis.

In vorteilhafter Weise kann zudem vorgesehen sein, dass die Steuerung, das Software-Update, die Kalibrierung und die Überwachung der OP- oder Untersuchungsleuchte von außen durch den Tragarm mittels eines Bedienfeldes und/oder eines Computers über die Datenleitung einer Ethernetverbindung, welche auch der Stromversorgung dient, mit einem Adernpaar und einfache Steckverbinder oder Klemmen erfolgt und/oder mittels eines in die OP- oder Untersuchungsleuchte oder in den Tragarm integrierten Computers mit einer Eingabe/Ausgabeeinheit erfolgt. Im Vergleich zum Stand der Technik resultiert dies in einem effizienteren Betrieb der OP- oder Untersuchungsleuchte, da nach dem Stand der Technik die Steuerung, das Software-Update, die Kalibrierung und die Überwachung einer OP- oder Untersuchungsleuchte direkt an der Leuchte erfolgt, wobei diverse Abdeckungen abmontiert werden müssen.

Der Tragarm der OP- oder Untersuchungsleuchte kann an einer Zentralachse montiert sein und mehrere Gelenke und mehrere Glieder aufweisen, welche durch Bewegungen der Gelenke gegeneinander verstellbar sind. Gemäß einer vorteilhaften Weiterbildung der Erfindung sind die Zentralachse und/oder Gelenke mittels jeweils eines Elektromotors verstellbar, so dass mindestens zwei, beispielsweise vier Freiheitsgrade realisierbar sind, wobei die Energieversorgung und Steuerung der Elektromotoren mittels des erfindungsgemäßen Verfahrens über eine Datenleitung einer Ethernetverbindung mit einem Adernpaar und einfache Steckverbinder oder Klemmen erfolgt. Die Elektromotoren können beispielsweise als steuerbare Servomotoren ausgeführt sein.

In die OP- oder Untersuchungsleuchte kann gemäß einer weiteren Ausgestaltung als Komponente ein Monitor integriert sein, welcher zudem berührungsempfindlich ausgeführt sein und als Ein- und Ausgabegerät dienen kann.

Bei einer OP- oder Untersuchungsleuchte mit mehreren Tragarmen, die jeweils einen Leuchtenkörper umfassen, kann jeder Tragarm gemäß dem beschriebenen Beispiel einer OP- oder Untersuchungsleuchte mit einem Tragarm und einem Leuchtenkörper ausgeführt sein. Insbesondere erfolgt die Energie- und Datenübertragung zwischen einem Einspeisepunkt und sämtlicher Komponenten der OP- oder Untersuchungsleuchte, die im/am Leuchtenkörper oder in den Tragarmen angeordnet sind, mittels eines Schaltungsaufbaus gemäß der Erfindung und einer Datenleitung einer Ethernetverbindung mit einem Adernpaar und einfache Steckverbinder oder Klemmen durch den Tragarm; die übertragbare elektrische Nutzleistung übersteigt erfindungsgemäß 60 W bei einer Datenübertragungsrate zwischen 1Mbit/s und 10Gbit/s oder höher, wobei gemäß einer Ausgestaltung der Erfindung die übertragbare elektrische Nutzleistung mindestens 120 W beträgt. Hierbei können im/am Leuchtenkörper und in jedem Tragarm unterschiedliche Komponenten der OP- oder Untersuchungsleuchte angeordnet sein. Beispielsweise kann ein Tragarm Mittel zur Speicherung und zur Aufnahme und/oder zur Anzeige von Bild- und Videodaten und ein weiterer Tragarm einen Computer mit einer Eingabe/Ausgabeeinheit umfassen.

Die Erfindung wird im Folgenden anhand der beigefügten Figuren beispielhaft näher erläutert. Es zeigen:
Figur 1: Eine schematische Darstellung einer Ausführungsform des Schaltungsaufbaus zur Energie- und Datenübertragung zwischen einem Einspeisepunkt und zumindest einem Verbraucher, insbesondere zur Durchführung des erfindungsgemäßen Verfahrens;
Figur 2: Eine schematische Darstellung einer weiteren Ausführungsform des Schaltungsaufbaus zur Energie- und Datenübertragung zwischen einem Einspeisepunkt und zumindest einem Verbraucher, insbesondere zur Durchführung des erfindungsgemäßen Verfahrens;
Figur 3: Eine schematische Darstellung einer weiteren Ausführungsform des Schaltungsaufbaus zur Energie- und Datenübertragung zwischen einem Einspeisepunkt und zumindest einem Verbraucher, insbesondere zur Durchführung des erfindungsgemäßen Verfahrens;
Figur 4: Eine schematische Darstellung einer weiteren Ausführungsform des Schaltungsaufbaus zur Energie- und Datenübertragung zwischen einem Einspeisepunkt und zumindest einem Verbraucher, insbesondere zur Durchführung des erfindungsgemäßen Verfahrens; und
Figur 5: Eine schematische Darstellung der Energie- und Datenübertragungsstrecke an einer OP- oder Untersuchungsleuchte mit einem Tragarm und einem Leuchtenkörper umfassend mehrere Gelenke und mehrere Glieder.

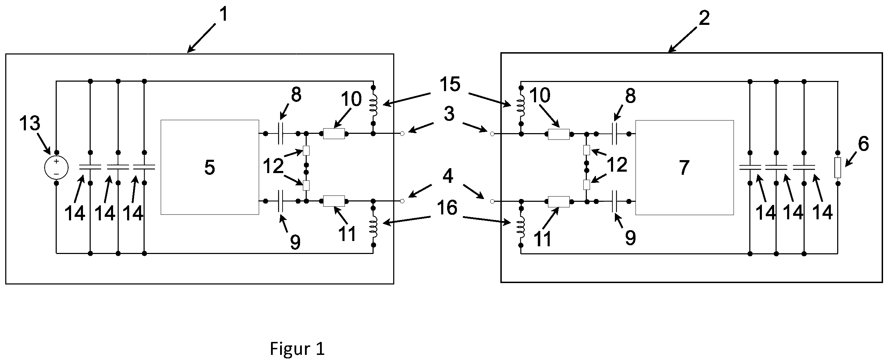

Gemäß einer Ausgestaltung der Erfindung und bezugnehmend auf Figur 1 umfasst der Schaltungsaufbau zur Energie- und Datenübertragung zwischen einem Einspeisepunkt und zumindest einem Verbraucher 6 ein erstes Schaltungsteil 1 und ein zweites Schaltungsteil 2, mit jeweils einem positiven und einem negativen Anschluss 3, 4. Das erste Schaltungsteil 1 umfasst eine Energiequelle 13 und einen PSE-PHY 5, wobei das zweite Schaltungsteil 2 zumindest einen Verbraucher 6 und einen PD-PHY 7 umfasst, wobei der PSE-PHY 5 und der PD-PHY 7 zum Zweck der bidirektionalen Kommunikation als Sender und Empfänger ausgeführt sind. Erfindungsgemäß sind die positiven und die negativen Anschlüsse 3, 4 des ersten und des zweiten Schaltungsteils 1, 2 jeweils über eine Ader einer beliebig ausgeführten Datenleitung einer Ethernetverbindung mit einem Adernpaar und einfache Steckverbinder oder Klemmen miteinander verbindbar.

Bezugnehmend auf Figur 1 weist das erste Schaltungsteil 1 für jeden Anschluss 3, 4 zum Koppeln & Entkoppeln der zu übertragenden Datensignale bei dem gezeigten Beispiel einen dem PSE-PHY 5 vorgeschalteten Kondensator 8, 9 auf, welcher die hochfrequenten Anteile der Datenübertragung passieren lässt und die niederfrequenten und Gleichspannungs-Anteile blockiert. Bei dem gezeigten Beispiel ist jedem der dem PSE-PHY 5 vorgeschalteten Kondensatoren 8, 9 eine Transient Blocking Unit (TBU-Strombegrenzer) 10, 11 vorgeschaltet, die als Strombegrenzer bzw. wie ein elektronischer Schalter oder Widerstand mit stromabhängiger Steuerung dient, welche bei normalen Betriebsbedingungen eine sehr niedrige Impedanz aufweist und den Stromfluss nicht beeinflusst, wobei wenn ein Überstromereignis erkannt wird, die Transient Blocking Unit 10, 11 in einen hochohmigen Zustand schaltet, wodurch der Stromfluss unterbrochen wird und der nachgeschaltete PSE-PHY geschützt wird.

Bei der Ausgestaltung nach Figur 1 sind zwei TVS-Dioden 12 vorgesehen, welche in Serie zwischen den Leitungen zum Verbinden der Anschlüsse des Schaltungsaufbaus mit dem PSE-PHY in einem Bereich zwischen den Kondensatoren 8, 9 und den Transient Blocking Units 10, 11 geschalten sind. Wenn ein Überspannungsereignis, verursacht beispielsweise durch elektrostatische Entladungen (ESD), Blitzeinschläge oder Schaltvorgänge die Durchbruchspannung einer TVS-Diode 12 übersteigt, klemmt die TVS-Diode 12 die Spannung, wodurch der nachgeschaltete PSE-PHY geschützt wird; zur Bereitstellung der Nutzleistung umfasst das erste Schaltungsteil ein Schaltnetzteil 13, welches eine Wechselspannung in eine Gleichspannung umwandelt, wobei bei dem gezeigten Beispiel drei dem Schaltnetzteil 13 nachgeschaltete, parallelgeschaltete Kondensatoren 14 vorgesehen sind, welche der Glättung der Ausgangsspannung und der Dämpfung hochfrequenter Störungen zur Lieferung einer gleichmäßigen DC-Spannung für die Datenleitungen dienen, wobei die Kondensatoren unterschiedliche Kapazitäten aufweisen, um Störungen über verschiedene Frequenzbereiche und über ein breiteres Frequenzspektrum hinweg zu unterdrücken.

Zum Koppeln der bereitgestellten Nutzleistung auf die Datenleitung weist das erste Schaltungsteil 1 eine jedem Anschluss zugeordnete Spule 15, 16 auf, welche niederfrequente und Gleichspanungs-Signalanteile passieren lässt und hochfrequente Anteile dämpft, den dem Schaltnetzteil nachgeschalteten, parallelgeschalteten Kondensatoren nachgeschaltet ist und mit der jeweiligen Leitung zum Verbinden der Anschlüsse 3, 4 des Schaltungsaufbaus mit dem PSE-PHY in einem Bereich zwischen der jeweiligen TVS-Diode 12 und dem jeweiligen Anschluss 3, 4 des ersten Schaltungsteils 1 verbunden ist. Die Spulen 15, 16 sind derart ausgeführt, dass elektrische Nutzleistung, die 60 W übersteigt, übertragbar ist.

Wie aus Figur 1 ersichtlich, entspricht der Aufbau des zweiten Schaltungsteils 2 dem Aufbau des ersten Schaltungsteils 1, mit dem Unterschied, dass anstelle des PSE-PHY ein PD-PHY vorgesehen ist und dass das zweite Schaltungsteil 2 anstelle des Schaltnetzteils 13 den zumindest einen Verbraucher 6 umfasst, welcher die vom ersten Schaltungsteil 1 bereitgestellte Nutzleistung, die von den Spulen 15, 16 des zweiten Schaltungsteils 2 entkoppelt wird, empfängt.

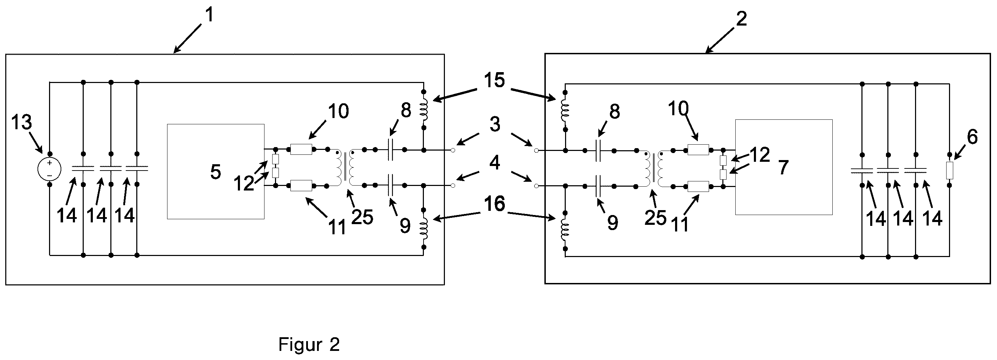

Gegenstand der Figur 2 ist eine weitere Ausgestaltung eines Schaltungsaufbaus zur Energie- und Datenübertragung zwischen einem Einspeisepunkt und zumindest einem Verbraucher, welche sich vom Ausführungsbeispiel nach Figur 1 dadurch unterscheidet, dass das erste Schaltungsteil 1 zum Koppeln & Entkoppeln der zu übertragenden Datensignale einen Übertrager 25 aufweist, welcher als Schutz am Eingang der Schnittstelle dient, dessen Primärseite mit jeweils einem Anschluss 3, 4 des ersten Schaltungsteils 1 über einen Kondensator 8, 9 verbunden ist und dessen Sekundärseite mit jeweils einem Anschluss des jeweiligen PSE-PHY 5 über jeweils eine Transient Blocking Unit 10, 11 verbunden ist, wobei mehrere, bei dem gezeigten Beispiel zwei TVS-Dioden 12 vorgesehen sind, die in Serie zwischen den Leitungen zum Verbinden der Anschlüsse des PSE-PHY 5 mit der Sekundärseite des Übertragers 25 in einem Bereich zwischen den Anschlüssen des PSE-PHY 5 und den Transient Blocking Units 10, 11 geschalten sind.

Analog zum Beispiel nach Figur 1 umfasst zur Bereitstellung der Nutzleistung das erste Schaltungsteil 1 ein Schaltnetzteil 13, welches eine Wechselspannung in eine Gleichspannung umwandelt, wobei mehrere, dem Schaltnetzteil 13 nachgeschaltete, parallelgeschaltete Kondensatoren 14 vorgesehen sind, welche der Glättung der Ausgangsspannung und der Dämpfung hochfrequenter Störungen zur Lieferung einer gleichmäßigen DC-Spannung für die Datenleitung dienen, wobei die Kondensatoren 14 unterschiedliche Kapazitäten aufweisen, um Störungen über verschiedene Frequenzbereiche und über ein breiteres Frequenzspektrum hinweg zu unterdrücken.

Zum Koppeln der bereitgestellten Nutzleistung auf die Datenleitung umfasst das erste Schaltungsteil 1 eine jedem Anschluss 3, 4 zugeordnete Spule 15, 16, welche niederfrequente und Gleichspanungs-Signalanteile passieren lässt und hochfrequente Anteile dämpft, den dem Schaltnetzteil 13 nachgeschalteten, parallelgeschalteten Kondensatoren 14 nachgeschaltet ist und mit der jeweiligen Leitung zum Verbinden der Anschlüsse 3, 4 des Schaltungsaufbaus mit dem PSE-PHY 5 in einem Bereich zwischen dem dem PSE-PHY 5 vorgeschalteten Kondensator 8, 9 und dem jeweiligen Anschluss 3, 4 des ersten Schaltungsteils 1 verbunden ist. Der Aufbau des zweiten Schaltungsteils 2 entspricht dem Aufbau des ersten Schaltungsteils 1, mit dem Unterschied, dass anstelle des PSE-PHY 5 der PD-PHY 7 vorgesehen ist und dass das zweite Schaltungsteil 2 anstelle des Schaltnetzteils 13 den zumindest einen Verbraucher 6 umfasst, welcher die vom ersten Schaltungsteil 1 bereitgestellte Nutzleistung, die von den Spulen 15, 16 des zweiten Schaltungsteils 2 entkoppelt wird, empfängt und wobei die Spulen 15, 16 des ersten und zweiten Schaltungsteils 1, 2 derart dimensioniert sind, dass elektrische Nutzleistung, die 60 W übersteigt, übertragbar ist.

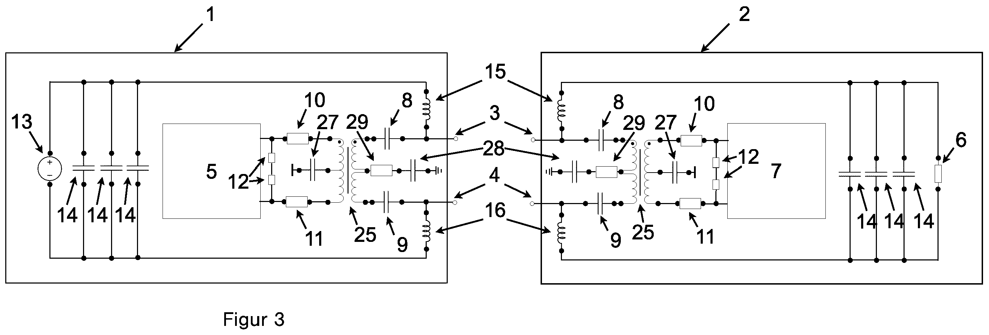

Das Ausführungsbeispiel gemäß Figur 3 unterscheidet sich vom Ausführungsbeispiel gemäß Figur 2 dadurch, dass an der Primärseite des Übertragers 25 beider Schaltungsteile eine Mittelanzapfung des Übertragers 25 über einen Widerstand 29 und einen Kondensator 28, die in Reihe geschaltet sind mit einer Bezugsmasse, beispielsweise eines Gehäuses des Schaltungsteils zur Erdung verbunden ist und dass an der Sekundärseite des Übertragers 25 eine Mittelanzapfung des Übertragers 25 über einen Kondensator 27 mit einer Bezugsmasse zum Schutz des jeweiligen PHY 5, 7 verbunden ist. Der Kondensator 27 verhindert einen Kurzschluss der Offsetspannung, welche der jeweilige PHY 5, 7ausgibt und über die das Datensignal überlagert ist zur Bezugsmasse. Des Weiteren gewährt er eine HF(Hochfrequenz)-Anbindung an Masse, damit Gleichtakt-Störungen über ihn gut abgeleitet werden. Der Widerstand 29 gewährleistet in vorteilhafter Weise einen Abschluss mit einer spezifizierten Impedanz.

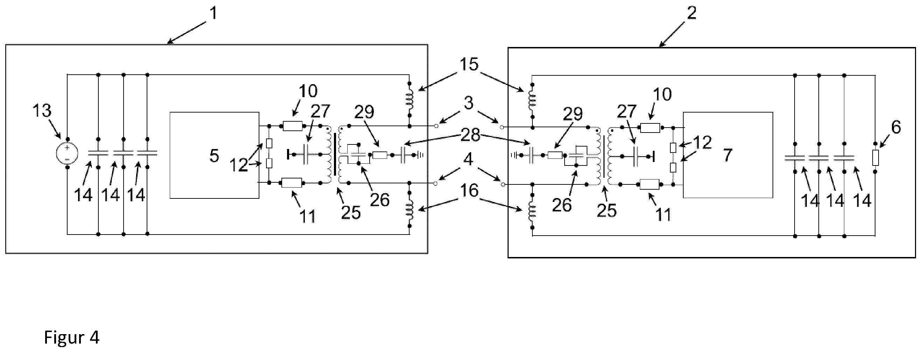

Das Ausführungsbeispiel nach Figur 4 unterscheidet sich vom Ausführungsbeispiel nach Figur 3 dadurch, dass die Primärseite des Übertragers 25 beider Schaltungsteile direkt mit jeweils einem Anschluss 3, 4 des jeweiligen Schaltungsteils 1, 2 verbunden ist (d.h. die Kondensatoren 8, 9 entfallen), und dass an der Primärseite des Übertragers zwischen der Mittelanzapfung des Übertragers 25 und dem Widerstand 29 ein Kondensator 26 zur galvanischen Trennung vorgesehen ist, um zu verhindern, dass Gleichstrom von der angelegten Versorgungsspannung durch den Übertrager 25 fließt.

Die Ausgestaltungen gemäß Figuren 2-4 können einen Ausgleich im Falle eines Ungleichgewichts der Signalspannung bis zu 1,5 kV gewährleisten, wobei die Ausgestaltung nach Figur 1 einen Ausgleich im Falle eines Ungleichgewichts der Signalspannung bis zu 250 V gewährleisten kann.

Der zumindest eine Verbraucher gemäß den beschriebenen Ausführungsformen kann als OP- oder Untersuchungsleuchte mit einem Tragarm und einem Leuchtenkörper oder als in eine OP- oder Untersuchungsleuchte integrierte Komponente ausgeführt sein, wobei das erste Schaltungsteil vor oder in der mechanischen Aufhängung des Tragarms und das zweite Schaltungsteil im oder am Leuchtenkörper angeordnet ist und wobei gemäß der Erfindung die Verbindung der beiden Schaltungsteile miteinander bzw. die Verbindung zur Energie- und Datenübertragung über eine Datenleitung einer Ethernetverbindung mit einem Adernpaar und einfache Steckverbinder oder Klemmen durch den Tragarm erfolgt.

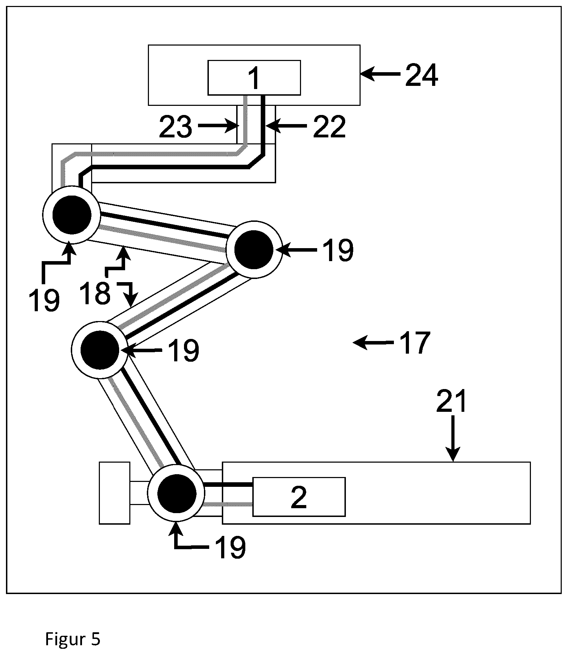

Gegenstand der Figur 5 ist eine schematische Darstellung der Energie- und Datenübertragungsstrecke an einer OP- oder Untersuchungsleuchte 17 mit einem Tragarm 18 und einem Leuchtenkörper 21 umfassend mehrere Gelenke 19 und mehrere Glieder 20, die durch Bewegungen der Gelenke 19 gegeneinander verstellbar sind. Die Energie- und Datenübertragung zwischen einem Einspeisepunkt und sämtlicher Komponenten der OP- oder Untersuchungsleuchte 17 erfolgt mittels des erfindungsgemäßen Schaltungsaufbaus, beispielsweise mittels eines Schaltungsaufbaus nach Figur 1, einer beliebig ausgeführten Datenleitung einer Ethernetverbindung mit einem Adernpaar und einfacher Steckverbinder oder Klemmen über Schleifkontakte durch den Tragarm 18. Die zwei Adern der Datenleitung sind in Figur 2 mit den Bezugszeichen 22 und 23 versehen. Im Tragarm 18 sind an jedem Gelenk 19 die erforderlichen Schleifkontakte vorgesehen.

Bei dem gezeigten Beispiel ist das erste Schaltungsteil 1 in der mechanischen Aufhängung 24 (beispielsweise in einem Deckenflansch) des Tragarms 18 angeordnet, wobei das zweite Schaltungsteil 2 im Leuchtenkörper 21 der OP- oder Untersuchungsleuchte 17 angeordnet ist.

Bei einer OP- oder Untersuchungsleuchte mit mehreren Tragarmen 18, die jeweils einen Leuchtenkörper 21 umfassen, an einer Zentralachse montiert sind und mehrere Gelenke 19 und mehrere Glieder 20 aufweisen, die durch Bewegungen der Gelenke 19 gegeneinander verstellbar sind, kann analog zum in Figur 5 gezeigten Beispiel vorgesehen sein, dass die Zentralachse und/oder Gelenke 19 der Tragarme 18 mittels jeweils eines Elektromotors verstellbar sind, so dass für jeden Tragarm 18 mindestens zwei Freiheitsgrade realisierbar sind, wobei die Energieversorgung und Steuerung der Elektromotoren mittels der Datenleitung einer Ethernetverbindung mit einem Adernpaar und einfacher Steckverbinder oder Klemmen erfolgt.

## Patentansprüche

1. Verfahren zur Energie- und Datenübertragung zwischen einem Einspeisepunkt und zumindest einem Verbraucher, **dadurch gekennzeichnet, dass** über eine Strecke definierter Länge, elektrische Nutzleistung, die 60 W übersteigt, über eine Datenleitung einer Ethernetverbindung mit einem Adernpaar und einer beliebigen Datenübertragungsrate übertragen wird.

2. Verfahren zur Energie- und Datenübertragung nach Anspruch 1, **dadurch gekennzeichnet, dass** die Datenübertragungsrate zwischen 1Mbit/s und 10Gbit/s beträgt.

3. Verfahren zur Energie- und Datenübertragung nach Anspruch 1 oder 2, **dadurch gekennzeichnet, dass** der zumindest eine Verbraucher eine OP-Leuchte, eine Untersuchungsleuchte, ein Monitor oder ein medizinisches Gerät ist oder als in eine OP- oder Untersuchungsleuchte integrierte Komponente ausgeführt ist.

4. Verfahren zur Energie- und Datenübertragung nach Anspruch 1, 2 oder 3, **dadurch gekennzeichnet, dass** Energie- und Daten zwischen einem Einspeisepunkt und zumindest einem Verbraucher übertragen werden, wobei die Verbraucher nach dem Punkt-zu-Punkt-Kommunikation-Prinzip geschaltet sind und sich zur Energie- und Datenübertragung eine Datenleitung einer Ethernetverbindung mit einem Adernpaar teilen.

5. Verfahren zur Energie- und Datenübertragung nach Anspruch 1, 2 oder 3, **dadurch gekennzeichnet, dass** Energie- und Daten zwischen einem Einspeisepunkt und mehreren Verbrauchern übertragen werden, wobei die Verbraucher nach dem Punkt-zu-Mehrpunkt-Kommunikation-Prinzip (MultiDrop) über jeweils einen Konnektor auf einer Leitung parallel geschaltet sind und sich zur Energie- und Datenübertragung eine Datenleitung einer Ethernetverbindung mit einem Adernpaar teilen.

6. Schaltungsaufbau zur Energie- und Datenübertragung zwischen einem Einspeisepunkt und zumindest einem Verbraucher, insbesondere zur Durchführung des Verfahrens nach einem der vorangehenden Ansprüche, umfassend ein erstes Schaltungsteil (1) und ein zweites Schaltungsteil (2), mit jeweils einem positiven und einem negativen Anschluss (3, 4), wobei das erste Schaltungsteil (1) eine Energiequelle und einen PSE-PHY (5) und das zweite Schaltungsteil zumindest einen Verbraucher (6) und einen PD-PHY (7) umfasst, wobei der PSE-PHY (5) und der PD-PHY (7) zum Zweck der bidirektionalen Kommunikation als Sender und Empfänger ausgeführt sind, **dadurch gekennzeichnet, dass** die positiven und die negativen Anschlüsse (3, 4) des ersten und des zweiten Schaltungsteils (1, 2) jeweils über eine Ader einer Datenleitung einer Ethernetverbindung mit einem Adernpaar und einfache Steckverbinder oder Klemmen miteinander verbindbar sind.

7. Schaltungsaufbau nach Anspruch 6, wobei das erste Schaltungsteil (1) für jeden Anschluss (3, 4) zum Koppeln & Entkoppeln der Datensignale einen dem PSE-PHY (5) vorgeschalteten Kondensator (8, 9) oder Übertrager aufweist, welcher die hochfrequenten Anteile der Datenübertragung passieren lässt und die niederfrequenten und Gleichspannungs-Anteile blockiert, wobei jedem der Kondensatoren (8, 9) optional eine Transient Blocking Unit (10, 11) vorgeschaltet ist, die als Strombegrenzer dient, welche bei normalen Betriebsbedingungen eine sehr niedrige Impedanz aufweist und den Stromfluss nicht beeinflusst, wobei wenn ein Überstromereignis erkannt wird, der Strombegrenzer in einen hochohmigen Zustand schaltet, wodurch der Stromfluss unterbrochen wird und der nachgeschaltete PSE-PHY (5) geschützt wird, wobei optional mehrere TVS-Dioden (12) vorgesehen sind, welche in Serie zwischen den Leitungen zum Verbinden der Anschlüsse des Schaltungsaufbaus mit dem PSE-PHY (5) in einem Bereich zwischen den Kondensatoren (8, 9) und den Transient Blocking Units (10, 11) -falls vorgesehen - geschalten sind, wobei wenn ein Überspannungsereignis die Durchbruchspannung einer TVS-Diode (12) übersteigt, die TVS-Diode (12) die Spannung klemmt, wodurch der nachgeschaltete PSE-PHY (5) geschützt wird, wobei zur Bereitstellung der Nutzleistung das erste Schaltungsteil (1) ein Schaltnetzteil (13) umfasst, welches eine Wechselspannung in eine Gleichspannung umwandelt, wobei mehrere, dem Schaltnetzteil (13) nachgeschaltete, parallelgeschaltete Kondensatoren (14) vorgesehen sind, welche der Glättung der Ausgangsspannung und der Dämpfung hochfrequenter Störungen zur Lieferung einer gleichmäßigen DC-Spannung für die Datenleitung dienen, wobei die Kondensatoren (14) unterschiedliche Kapazitäten aufweisen, um Störungen über verschiedene Frequenzbereiche und über ein breiteres Frequenzspektrum hinweg zu unterdrücken, wobei zum Koppeln der bereitgestellten Nutzleistung auf die Datenleitung das erste Schaltungsteil (1) eine jedem Anschluss (3, 4) zugeordnete Spule (15, 16) umfasst, welche niederfrequente und Gleichspanungs-Signalanteile passieren lässt und hochfrequente Anteile dämpft, den dem Schaltnetzteil (13) nachgeschalteten, parallelgeschalteten Kondensatoren (14) nachgeschaltet ist und mit der jeweiligen Leitung zum Verbinden der Anschlüsse (3, 4) des Schaltungsaufbaus mit dem PSE-PHY (5) in einem Bereich zwischen dem dem PSE-PHY (5) vorgeschalteten Kondensator (8, 9) oder Übertrager und dem jeweiligen Anschluss (3, 4) des ersten Schaltungsteils (1) und falls TVS-Dioden vorgesehen sind, in einem Bereich zwischen der jeweiligen TVS-Diode (12) und dem jeweiligen Anschluss (3, 4) des ersten Schaltungsteils (1) verbunden ist, wobei der Aufbau des zweiten Schaltungsteils (2) dem Aufbau des ersten Schaltungsteils (1) entspricht, mit dem Unterschied, dass anstelle des PSE-PHY (5) der PD-PHY (7) vorgesehen ist und dass das zweite Schaltungsteil (2) anstelle des Schaltnetzteils (13) den zumindest einen Verbraucher (6) umfasst, welcher die vom ersten Schaltungsteil (1) bereitgestellte Nutzleistung, die von den Spulen (15, 16) des zweiten Schaltungsteils (2) entkoppelt wird, empfängt und wobei die Spulen (15, 16) des ersten und zweiten Schaltungsteils (1, 2) derart dimensioniert sind, dass elektrische Nutzleistung, die 60 W übersteigt, übertragbar ist.

8. Schaltungsaufbau nach Anspruch 6, wobei das erste Schaltungsteil (1) zum Koppeln & Entkoppeln der zu übertragenden Datensignale ein Übertrager (25) vorgesehen ist, welcher als Schutz am Eingang der Schnittstelle dient, dessen Primärseite mit jeweils einem Anschluss (3, 4) des ersten Schaltungsteils (1) über einen Kondensator (8, 9) verbunden ist und dessen Sekundärseite mit jeweils einem Anschluss des jeweiligen PSE-PHY (5) über jeweils eine Transient Blocking Unit (10, 11) verbunden ist, wobei mehrere TVS-Dioden (12) vorgesehen sind, welche in Serie zwischen den Leitungen zum Verbinden der Anschlüsse des jeweiligen PSE-PHY (5) mit der Sekundärseite des Übertragers (25) in einem Bereich zwischen den Anschlüssen des PSE-PHY (5) und den Transient Blocking Units (10, 11) geschalten sind, wobei zur Bereitstellung der Nutzleistung das erste Schaltungsteil (1) ein Schaltnetzteil (13) umfasst, welches eine Wechselspannung in eine Gleichspannung umwandelt, wobei mehrere, dem Schaltnetzteil (13) nachgeschaltete, parallelgeschaltete Kondensatoren (14) vorgesehen sind, welche der Glättung der Ausgangsspannung und der Dämpfung hochfrequenter Störungen zur Lieferung einer gleichmäßigen DC-Spannung für die Datenleitung dienen, wobei die Kondensatoren (14) unterschiedliche Kapazitäten aufweisen, um Störungen über verschiedene Frequenzbereiche und über ein breiteres Frequenzspektrum hinweg zu unterdrücken, wobei zum Koppeln der bereitgestellten Nutzleistung auf die Datenleitung das erste Schaltungsteil (1) eine jedem Anschluss (3, 4) zugeordnete Spule (15, 16) umfasst, welche niederfrequente und Gleichspanungs-Signalanteile passieren lässt und hochfrequente Anteile dämpft, den dem Schaltnetzteil (13) nachgeschalteten, parallelgeschalteten Kondensatoren (14) nachgeschaltet ist und mit der jeweiligen Leitung zum Verbinden der Anschlüsse (3, 4) des Schaltungsaufbaus mit dem PSE-PHY (5) in einem Bereich zwischen dem dem PSE-PHY (5) vorgeschalteten Kondensator (8, 9) oder Übertrager und dem jeweiligen Anschluss (3, 4) des ersten Schaltungsteils (1) verbunden ist, wobei der Aufbau des zweiten Schaltungsteils (2) dem Aufbau des ersten Schaltungsteils (1) entspricht, mit dem Unterschied, dass anstelle des PSE-PHY (5) der PD-PHY (7) vorgesehen ist und dass das zweite Schaltungsteil (2) anstelle des Schaltnetzteils (13) den zumindest einen Verbraucher (6) umfasst, welcher die vom ersten Schaltungsteil (1) bereitgestellte Nutzleistung, die von den Spulen (15, 16) des zweiten Schaltungsteils (2) entkoppelt wird, empfängt und wobei die Spulen (15, 16) des ersten und zweiten Schaltungsteils (1, 2) derart dimensioniert sind, dass elektrische Nutzleistung, die 60 W übersteigt, übertragbar ist.

9. Schaltungsaufbau nach Anspruch 8, wobei an der Primärseite des Übertragers (25) beider Schaltungsteile (1, 2) eine Mittelanzapfung des Übertragers (25) über einen Widerstand (29) und einen Kondensator (28), die in Reihe geschaltet sind mit einer Bezugsmasse zur Erdung verbunden ist, wobei an der Sekundärseite des Übertragers (25) eine Mittelanzapfung des Übertragers (25) über einen Kondensator (27) mit einer Bezugsmasse zum Schutz des jeweiligen PHY (5, 7) verbunden ist, wobei der Kondensator (27) einen Kurzschluss der Offsetspannung, welche der jeweilige PHY (5, 7) ausgibt und über die das Datensignal überlagert ist zur Bezugsmasse verhindert.

10. Schaltungsaufbau nach Anspruch 9, wobei die Primärseite des Übertragers (25) beider Schaltungsteile (1, 2) direkt mit jeweils einem Anschluss (3, 4) des jeweiligen Schaltungsteils (1, 2) verbunden ist (d.h. die Kondensatoren 8, 9 entfallen), und wobei an der Primärseite des Übertragers (25) zwischen der Mittelanzapfung des Übertragers (25) und dem Widerstand (29) ein Kondensator (26) zur galvanischen Trennung vorgesehen ist.

11. Schaltungsaufbau nach Anspruch 6, 7, 8, 9 oder 10, **dadurch gekennzeichnet, dass** der zumindest eine Verbraucher (6) als OP- oder Untersuchungsleuchte (17) mit einem Tragarm (18) und einem Leuchtenkörper (21) oder als in eine OP- oder Untersuchungsleuchte (17) integrierte Komponente ausgeführt ist, wobei das erste Schaltungsteil (1) vor oder in der mechanischen Aufhängung (24) des Tragarms (18) und das zweite Schaltungsteil (2) im Leuchtenkörper (21) angeordnet ist, wobei die Verbindung der beiden Schaltungsteile (1, 2) miteinander bzw. die Verbindung zur Energie- und Datenübertragung über die Datenleitung einer Ethernetverbindung mit einem Adernpaar (22, 23) und einfache Steckverbinder oder Klemmen durch den Tragarm (18) erfolgt.

12. OP- oder Untersuchungsleuchte (17) mit zumindest einem einen Leuchtenkörper (21) umfassenden Tragarm (18), **dadurch gekennzeichnet, dass** wenn die OP- oder Untersuchungsleuchte (17) einen einen Leuchtenkörper (21) aufweisenden Tragarm (18) aufweist, die Energie- und Datenübertragung zwischen einem Einspeisepunkt und sämtlicher Komponenten der OP- oder Untersuchungsleuchte (17) mittels eines Schaltungsaufbaus nach einem der Ansprüche 6-11, einer Datenleitung einer Ethernetverbindung mit einem Adernpaar und einfacher Steckverbinder oder Klemmen durch den Tragarm (18) erfolgt, wobei das erste Schaltungsteil (1) vor oder in der mechanischen Aufhängung des Tragarms (18) und das zweite Schaltungsteil (2) im Leuchtenkörper (21) angeordnet ist, wobei die übertragbare elektrische Nutzleistung 60 W übersteigt und die Datenübertragungsrate zwischen 1Mbit/s und 10Gbit/s oder höher beträgt, wobei bei einer OP- oder Untersuchungsleuchte (17) mit mehreren Tragarmen (18) , die jeweils einen Leuchtenkörper (21) umfassen, in jedem Tragarm (18) unterschiedliche Komponenten angeordnet sein können und wobei entweder für jeden Tragarm (18) ein erstes Schaltungsteil (1) eines Schaltungsaufbaus nach einem der Ansprüche 6-11 vor oder in der mechanischen Aufhängung des Tragarms (18) und ein zweites Schaltungsteil (2) eines Schaltungsaufbaus nach einem der Ansprüche 6-11 im Leuchtenkörper (21) angeordnet ist, wobei die Verbindung der beiden Schaltungsteile (1) miteinander über eine Datenleitung einer Ethernetverbindung mit einem Adernpaar und einfache Steckverbinder oder Klemmen durch den jeweiligen Tragarm (18) erfolgt oder lediglich ein erstes Schaltungsteil (1) eines Schaltungsaufbaus nach einem der Ansprüche 6-11 in der mechanischen Aufhängung der Tragarme (18) vorgesehen ist, welches nach dem Punkt-zu-Mehrpunkt-Kommunikation-Prinzip (MultiDrop) über jeweils einen Konnektor mit jeweils einem zweiten, in jedem Tragarm (18) vorgesehenen zweiten Schaltungsteil (2) eines Schaltungsaufbaus nach einem der Ansprüche 6-11 verbunden ist, wobei die zweiten Schaltungsteile (2) parallel geschaltet sind und sich zur Energie- und Datenübertragung eine Datenleitung einer Ethernetverbindung mit einem Adernpaar teilen.

13. OP- oder Untersuchungsleuchte (17) mit zumindest einem einen Leuchtenkörper (21) umfassenden Tragarm (18) nach Anspruch 12, **dadurch gekennzeichnet, dass** in die OP- oder Untersuchungsleuchte (17) Mittel zur Speicherung und zur Aufnahme und/oder zur Anzeige von Bild- und Videodaten integriert sind und/oder dass in die OP- oder Untersuchungsleuchte (17) Mittel zur Speicherung und zur Aufnahme und/oder zum Abspielen von Audiodaten integriert sind, wobei über zumindest einen Tragarm (18) Audio, Bild- und Videodaten zwischen der OP- oder Untersuchungsleuchte (17) und einem Netzwerkgerät, das als Ethernet-Switch, Router oder Gateway ausgeführt sein kann bidirektional übertragbar sind und/oder dass Audio, Bild- und Videodaten mittels in die OP- oder Untersuchungsleuchte (17) integrierter CPU und Speichermittel auswertbar sind.

14. OP- oder Untersuchungsleuchte (17) mit zumindest einem einen Leuchtenkörper (21) umfassenden Tragarm (18) nach Anspruch 12 oder 13, **dadurch gekennzeichnet, dass** die Steuerung, das Software-Update, die Kalibrierung und die Überwachung der OP- oder Untersuchungsleuchte (17) von außen durch zumindest einen Tragarm (18) mittels eines Bedienfeldes und/oder eines Computers über die Datenleitung der Ethernetverbindung mit einem Adernpaar und einfache Steckverbinder oder Klemmen erfolgt und/oder mittels eines in die OP- oder Untersuchungsleuchte (17) oder in zumindest einen Tragarm (18) integrierten Computers mit einer Eingabe/Ausgabeeinheit erfolgt.

15. OP- oder Untersuchungsleuchte (17) mit zumindest einem einen Leuchtenkörper (21) umfassenden Tragarm (18) nach einem der Ansprüche 12-14, wobei der zumindest eine Tragarm (18) an einer Zentralachse montiert ist und mehrere Gelenke (19) und mehrere Glieder (20) aufweist, die durch Bewegungen der Gelenke (19) gegeneinander verstellbar sind, wobei die Zentralachse und/oder Gelenke (19) mittels jeweils eines Elektromotors verstellbar sind, so dass für jeden Tragarm (18) mindestens zwei Freiheitsgrade realisierbar sind, wobei die Energieversorgung und Steuerung der Elektromotoren mittels der Datenleitung einer Ethernetverbindung mit einem Adernpaar und einfacher Steckverbinder oder Klemmen erfolgt.

16. OP- oder Untersuchungsleuchte (17) mit zumindest einem einen Leuchtenkörper (21) umfassenden Tragarm (18) nach einem vorangehenden Ansprüche 12-15, wobei in die OP- oder Untersuchungsleuchte (17) ein Monitor integriert ist.

17. OP- oder Untersuchungsleuchte (17) mit zumindest einem einen Leuchtenkörper (21) umfassenden Tragarm (18) nach einem der vorangehenden Ansprüche 12-16, **dadurch gekennzeichnet, dass** eine bidirektionale Übertragung patienten- und/oder therapiebezogener Daten zwischen der OP- oder Untersuchungsleuchte (17) und einem externen Computer sowie die Einbindung bildgebender Verfahren, beispielsweise zur Projektion und Visualisierung auf einem Patienten realisierbar ist.

## Geänderte Patentansprüche

### Geänderte Patentansprüche gemäss Regel 137(2) EPÜ.

1. Verfahren zur Energie- und Datenübertragung zwischen einem Einspeisepunkt und zumindest einem Verbraucher, **dadurch gekennzeichnet, dass** über eine Strecke definierter Länge, elektrische Nutzleistung, die 60 W übersteigt, über eine Datenleitung einer Ethernetverbindung mit einem Adernpaar und einer beliebigen Datenübertragungsrate übertragen wird.

2. Verfahren zur Energie- und Datenübertragung nach Anspruch 1, **dadurch gekennzeichnet, dass** die Datenübertragungsrate zwischen 1Mbit/s und 10Gbit/s beträgt.

3. Verfahren zur Energie- und Datenübertragung nach Anspruch 1 oder 2, **dadurch gekennzeichnet, dass** der zumindest eine Verbraucher eine OP-Leuchte, eine Untersuchungsleuchte, ein Monitor oder ein medizinisches Gerät ist oder als in eine OP- oder Untersuchungsleuchte integrierte Komponente ausgeführt ist.

4. Verfahren zur Energie- und Datenübertragung nach Anspruch 1, 2 oder 3, **dadurch gekennzeichnet, dass** Energie- und Daten zwischen einem Einspeisepunkt und zumindest einem Verbraucher übertragen werden, wobei die Verbraucher nach dem Punkt-zu-Punkt-Kommunikation-Prinzip geschaltet sind und sich zur Energie- und Datenübertragung eine Datenleitung einer Ethernetverbindung mit einem Adernpaar teilen.

5. Verfahren zur Energie- und Datenübertragung nach Anspruch 1, 2 oder 3, **dadurch gekennzeichnet, dass** Energie- und Daten zwischen einem Einspeisepunkt und mehreren Verbrauchern übertragen werden, wobei die Verbraucher nach dem Punkt-zu-Mehrpunkt-Kommunikation-Prinzip (MultiDrop) über jeweils einen Konnektor auf einer Leitung parallel geschaltet sind und sich zur Energie- und Datenübertragung eine Datenleitung einer Ethernetverbindung mit einem Adernpaar teilen.

6. Schaltungsaufbau zur Energie- und Datenübertragung zwischen einem Einspeisepunkt und zumindest einem Verbraucher, insbesondere zur Durchführung des Verfahrens nach einem der vorangehenden Ansprüche, umfassend ein erstes Schaltungsteil (1) und ein zweites Schaltungsteil (2), mit jeweils einem positiven und einem negativen Anschluss (3, 4), wobei das erste Schaltungsteil (1) eine Energiequelle und einen PSE-PHY (5) und das zweite Schaltungsteil zumindest einen Verbraucher (6) und einen PD-PHY (7) umfasst, wobei der PSE-PHY (5) und der PD-PHY (7) zum Zweck der bidirektionalen Kommunikation als Sender und Empfänger ausgeführt sind, wobei die positiven und die negativen Anschlüsse (3, 4) des ersten und des zweiten Schaltungsteils (1, 2) jeweils über eine Ader einer Datenleitung einer Ethernetverbindung mit einem Adernpaar und einfache Steckverbinder oder Klemmen miteinander verbindbar sind, wobei das erste Schaltungsteil (1) für jeden Anschluss (3, 4) zum Koppeln & Entkoppeln der Datensignale einen dem PSE-PHY (5) vorgeschalteten Kondensator (8, 9) oder Übertrager aufweist, welcher die hochfrequenten Anteile der Datenübertragung passieren lässt und die niederfrequenten und Gleichspannungs-Anteile blockiert, wobei jedem der Kondensatoren (8, 9) optional eine Transient Blocking Unit (10, **11)** vorgeschaltet ist, die als Strombegrenzer dient, welche bei normalen Betriebsbedingungen eine sehr niedrige Impedanz aufweist und den Stromfluss nicht beeinflusst, wobei wenn ein Überstromereignis erkannt wird, der Strombegrenzer in einen hochohmigen Zustand schaltet, wodurch der Stromfluss unterbrochen wird und der nachgeschaltete PSE-PHY (5) geschützt wird, wobei optional mehrere TVS-Dioden (12) vorgesehen sind, welche in Serie zwischen den Leitungen zum Verbinden der Anschlüsse des Schaltungsaufbaus mit dem PSE-PHY (5) in einem Bereich zwischen den Kondensatoren (8, 9) und den Transient Blocking Units (10, **11)** -falls vorgesehen - geschalten sind, wobei wenn ein Überspannungsereignis die Durchbruchspannung einer TVS-Diode (12) übersteigt, die TVS-Diode (12) die Spannung klemmt, wodurch der nachgeschaltete PSE-PHY (5) geschützt wird, wobei zur Bereitstellung der Nutzleistung das erste Schaltungsteil (1) ein Schaltnetzteil (13) umfasst, welches eine Wechselspannung in eine Gleichspannung umwandelt, wobei mehrere, dem Schaltnetzteil (13) nachgeschaltete, parallelgeschaltete Kondensatoren (14) vorgesehen sind, welche der Glättung der Ausgangsspannung und der Dämpfung hochfrequenter Störungen zur Lieferung einer gleichmäßigen DC-Spannung für die Datenleitung dienen, wobei die Kondensatoren (14) unterschiedliche Kapazitäten aufweisen, um Störungen über verschiedene Frequenzbereiche und über ein breiteres Frequenzspektrum hinweg zu unterdrücken, wobei zum Koppeln der bereitgestellten Nutzleistung auf die Datenleitung das erste Schaltungsteil (1) eine jedem Anschluss (3, 4) zugeordnete Spule (15, 16) umfasst, welche niederfrequente und Gleichspanungs-Signalanteile passieren lässt und hochfrequente Anteile dämpft, den dem Schaltnetzteil (13) nachgeschalteten, parallelgeschalteten Kondensatoren (14) nachgeschaltet ist und mit der jeweiligen Leitung zum Verbinden der Anschlüsse (3, 4) des Schaltungsaufbaus mit dem PSE-PHY (5) in einem Bereich zwischen dem dem PSE-PHY (5) vorgeschalteten Kondensator (8, 9) oder Übertrager und dem jeweiligen Anschluss (3, 4) des ersten Schaltungsteils (1) und falls TVS-Dioden vorgesehen sind, in einem Bereich zwischen der jeweiligen TVS-Diode (12) und dem jeweiligen Anschluss (3, 4) des ersten Schaltungsteils (1) verbunden ist, wobei der Aufbau des zweiten Schaltungsteils (2) dem Aufbau des ersten Schaltungsteils (1) entspricht, mit dem Unterschied, dass anstelle des PSE-PHY (5) der PD-PHY (7) vorgesehen ist und dass das zweite Schaltungsteil (2) anstelle des Schaltnetzteils (13) den zumindest einen Verbraucher (6) umfasst, welcher die vom ersten Schaltungsteil (1) bereitgestellte Nutzleistung, die von den Spulen (15, 16) des zweiten Schaltungsteils (2) entkoppelt wird, empfängt und wobei die Spulen (15, 16) des ersten und zweiten Schaltungsteils (1, 2) derart dimensioniert sind, dass elektrische Nutzleistung, die 60 W übersteigt, übertragbar ist..

7. Schaltungsaufbau zur Energie- und Datenübertragung zwischen einem Einspeisepunkt und zumindest einem Verbraucher, insbesondere zur Durchführung des Verfahrens nach einem der vorangehenden Ansprüche, umfassend ein erstes Schaltungsteil (1) und ein zweites Schaltungsteil (2), mit jeweils einem positiven und einem negativen Anschluss (3, 4), wobei das erste Schaltungsteil (1) eine Energiequelle und einen PSE-PHY (5) und das zweite Schaltungsteil zumindest einen Verbraucher (6) und einen PD-PHY (7) umfasst, wobei der PSE-PHY (5) und der PD-PHY (7) zum Zweck der bidirektionalen Kommunikation als Sender und Empfänger ausgeführt sind, wobei die positiven und die negativen Anschlüsse (3, 4) des ersten und des zweiten Schaltungsteils (1, 2) jeweils über eine Ader einer Datenleitung einer Ethernetverbindung mit einem Adernpaar und einfache Steckverbinder oder Klemmen miteinander verbindbar sind,, wobei im ersten Schaltungsteil (1) zum Koppeln & Entkoppeln der zu übertragenden Datensignale ein Übertrager (25) vorgesehen ist, welcher als Schutz am Eingang der Schnittstelle dient, dessen Primärseite mit jeweils einem Anschluss (3, 4) des ersten Schaltungsteils (1) über einen Kondensator (8, 9) verbunden ist und dessen Sekundärseite mit jeweils einem Anschluss des jeweiligen PSE-PHY (5) über jeweils eine Transient Blocking Unit (10, **11)** verbunden ist, wobei mehrere TVS-Dioden (12) vorgesehen sind, welche in Serie zwischen den Leitungen zum Verbinden der Anschlüsse des jeweiligen PSE-PHY (5) mit der Sekundärseite des Übertragers (25) in einem Bereich zwischen den Anschlüssen des PSE-PHY (5) und den Transient Blocking Units (10, **11)** geschalten sind, wobei zur Bereitstellung der Nutzleistung das erste Schaltungsteil (1) ein Schaltnetzteil (13) umfasst, welches eine Wechselspannung in eine Gleichspannung umwandelt, wobei mehrere, dem Schaltnetzteil (13) nachgeschaltete, parallelgeschaltete Kondensatoren (14) vorgesehen sind, welche der Glättung der Ausgangsspannung und der Dämpfung hochfrequenter Störungen zur Lieferung einer gleichmäßigen DC-Spannung für die Datenleitung dienen, wobei die Kondensatoren (14) unterschiedliche Kapazitäten aufweisen, um Störungen über verschiedene Frequenzbereiche und über ein breiteres Frequenzspektrum hinweg zu unterdrücken, wobei zum Koppeln der bereitgestellten Nutzleistung auf die Datenleitung das erste Schaltungsteil (1) eine jedem Anschluss (3, 4) zugeordnete Spule (15, 16) umfasst, welche niederfrequente und Gleichspanungs-Signalanteile passieren lässt und hochfrequente Anteile dämpft, den dem Schaltnetzteil (13) nachgeschalteten, parallelgeschalteten Kondensatoren (14) nachgeschaltet ist und mit der jeweiligen Leitung zum Verbinden der Anschlüsse (3, 4) des Schaltungsaufbaus mit dem PSE-PHY (5) in einem Bereich zwischen dem dem PSE-PHY (5) vorgeschalteten Kondensator (8, 9) oder Übertrager und dem jeweiligen Anschluss (3, 4) des ersten Schaltungsteils (1) verbunden ist, wobei der Aufbau des zweiten Schaltungsteils (2) dem Aufbau des ersten Schaltungsteils (1) entspricht, mit dem Unterschied, dass anstelle des PSE-PHY (5) der PD-PHY (7) vorgesehen ist und dass das zweite Schaltungsteil (2) anstelle des Schaltnetzteils (13) den zumindest einen Verbraucher (6) umfasst, welcher die vom ersten Schaltungsteil (1) bereitgestellte Nutzleistung, die von den Spulen (15, 16) des zweiten Schaltungsteils (2) entkoppelt wird, empfängt und wobei die Spulen (15, 16) des ersten und zweiten Schaltungsteils (1, 2) derart dimensioniert sind, dass elektrische Nutzleistung, die 60 W übersteigt, übertragbar ist.

8. Schaltungsaufbau nach Anspruch 7, wobei an der Primärseite des Übertragers (25) beider Schaltungsteile (1, 2) eine Mittelanzapfung des Übertragers (25) über einen Widerstand (29) und einen Kondensator (28), die in Reihe geschaltet sind mit einer Bezugsmasse zur Erdung verbunden ist, wobei an der Sekundärseite des Übertragers (25) eine Mittelanzapfung des Übertragers (25) über einen Kondensator (27) mit einer Bezugsmasse zum Schutz des jeweiligen PHY (5, 7) verbunden ist, wobei der Kondensator (27) einen Kurzschluss der Offsetspannung, welche der jeweilige PHY (5, 7) ausgibt und über die das Datensignal überlagert ist zur Bezugsmasse verhindert.

9. Schaltungsaufbau nach Anspruch 8, wobei die Primärseite des Übertragers (25) beider Schaltungsteile (1, 2) direkt mit jeweils einem Anschluss (3, 4) des jeweiligen Schaltungsteils (1, 2) verbunden ist (d.h. die Kondensatoren 8, 9 entfallen), und wobei an der Primärseite des Übertragers (25) zwischen der Mittelanzapfung des Übertragers (25) und dem Widerstand (29) ein Kondensator (26) zur galvanischen Trennung vorgesehen ist.

10. Schaltungsaufbau nach Anspruch 6, 7, 8 oder 9, **dadurch gekennzeichnet, dass** der zumindest eine Verbraucher (6) als OP- oder Untersuchungsleuchte (17) mit einem Tragarm (18) und einem Leuchtenkörper (21) oder als in eine OP- oder Untersuchungsleuchte (17) integrierte Komponente ausgeführt ist, wobei das erste Schaltungsteil (1) vor oder in der mechanischen Aufhängung (24) des Tragarms (18) und das zweite Schaltungsteil (2) im Leuchtenkörper (21) angeordnet ist, wobei die Verbindung der beiden Schaltungsteile (1, 2) miteinander bzw. die Verbindung zur Energie- und Datenübertragung über die Datenleitung einer Ethernetverbindung mit einem Adernpaar (22, 23) und einfache Steckverbinder oder Klemmen durch den Tragarm (18) erfolgt.

11. OP- oder Untersuchungsleuchte (17) mit zumindest einem einen Leuchtenkörper (21) umfassenden Tragarm (18), **dadurch gekennzeichnet, dass** wenn die OP- oder Untersuchungsleuchte (17) einen einen Leuchtenkörper (21) aufweisenden Tragarm (18) aufweist, die Energie- und Datenübertragung zwischen einem Einspeisepunkt und sämtlicher Komponenten der OP- oder Untersuchungsleuchte (17) mittels eines Schaltungsaufbaus nach einem der Ansprüche 6-11, einer Datenleitung einer Ethernetverbindung mit einem Adernpaar und einfacher Steckverbinder oder Klemmen durch den Tragarm (18) erfolgt, wobei das erste Schaltungsteil (1) vor oder in der mechanischen Aufhängung des Tragarms (18) und das zweite Schaltungsteil (2) im Leuchtenkörper (21) angeordnet ist, wobei die übertragbare elektrische Nutzleistung 60 W übersteigt und die Datenübertragungsrate zwischen 1Mbit/s und 10Gbit/s oder höher beträgt, wobei bei einer OP- oder Untersuchungsleuchte (17) mit mehreren Tragarmen (18) , die jeweils einen Leuchtenkörper (21) umfassen, in jedem Tragarm (18) unterschiedliche Komponenten angeordnet sein können und wobei entweder für jeden Tragarm (18) ein erstes Schaltungsteil (1) eines Schaltungsaufbaus nach einem der Ansprüche 6-11 vor oder in der mechanischen Aufhängung des Tragarms (18) und ein zweites Schaltungsteil (2) eines Schaltungsaufbaus nach einem der Ansprüche 6-11 im Leuchtenkörper (21) angeordnet ist, wobei die Verbindung der beiden Schaltungsteile (1) miteinander über eine Datenleitung einer Ethernetverbindung mit einem Adernpaar und einfache Steckverbinder oder Klemmen durch den jeweiligen Tragarm (18) erfolgt oder lediglich ein erstes Schaltungsteil (1) eines Schaltungsaufbaus nach einem der Ansprüche 6-11 in der mechanischen Aufhängung der Tragarme (18) vorgesehen ist, welches nach dem Punkt-zu-Mehrpunkt-Kommunikation-Prinzip (MultiDrop) über jeweils einen Konnektor mit jeweils einem zweiten, in jedem Tragarm (18) vorgesehenen zweiten Schaltungsteil (2) eines Schaltungsaufbaus nach einem der Ansprüche 6-11 verbunden ist, wobei die zweiten Schaltungsteile (2) parallel geschaltet sind und sich zur Energie- und Datenübertragung eine Datenleitung einer Ethernetverbindung mit einem Adernpaar teilen.

12. OP- oder Untersuchungsleuchte (17) mit zumindest einem einen Leuchtenkörper (21) umfassenden Tragarm (18) nach Anspruch 11, **dadurch gekennzeichnet, dass** in die OP- oder Untersuchungsleuchte (17) Mittel zur Speicherung und zur Aufnahme und/oder zur Anzeige von Bild- und Videodaten integriert sind und/oder dass in die OP- oder Untersuchungsleuchte (17) Mittel zur Speicherung und zur Aufnahme und/oder zum Abspielen von Audiodaten integriert sind, wobei über zumindest einen Tragarm (18) Audio, Bild- und Videodaten zwischen der OP- oder Untersuchungsleuchte (17) und einem Netzwerkgerät, das als Ethernet-Switch, Router oder Gateway ausgeführt sein kann bidirektional übertragbar sind und/oder dass Audio, Bild- und Videodaten mittels in die OP- oder Untersuchungsleuchte (17) integrierter CPU und Speichermittel auswertbar sind.

13. OP- oder Untersuchungsleuchte (17) mit zumindest einem einen Leuchtenkörper (21) umfassenden Tragarm (18) nach Anspruch 11 oder 12, **dadurch gekennzeichnet, dass** die Steuerung, das Software-Update, die Kalibrierung und die Überwachung der OP- oder Untersuchungsleuchte (17) von außen durch zumindest einen Tragarm (18) mittels eines Bedienfeldes und/oder eines Computers über die Datenleitung der Ethernetverbindung mit einem Adernpaar und einfache Steckverbinder oder Klemmen erfolgt und/oder mittels eines in die OP- oder Untersuchungsleuchte (17) oder in zumindest einen Tragarm (18) integrierten Computers mit einer Eingabe/Ausgabeeinheit erfolgt.

14. OP- oder Untersuchungsleuchte (17) mit zumindest einem einen Leuchtenkörper (21) umfassenden Tragarm (18) nach einem der Ansprüche 11-13, wobei der zumindest eine Tragarm (18) an einer Zentralachse montiert ist und mehrere Gelenke (19) und mehrere Glieder (20) aufweist, die durch Bewegungen der Gelenke (19) gegeneinander verstellbar sind, wobei die Zentralachse und/oder Gelenke (19) mittels jeweils eines Elektromotors verstellbar sind, so dass für jeden Tragarm (18) mindestens zwei Freiheitsgrade realisierbar sind, wobei die Energieversorgung und Steuerung der Elektromotoren mittels der Datenleitung einer Ethernetverbindung mit einem Adernpaar und einfacher Steckverbinder oder Klemmen erfolgt.

15. OP- oder Untersuchungsleuchte (17) mit zumindest einem einen Leuchtenkörper (21) umfassenden Tragarm (18) nach einem vorangehenden Ansprüche 11-14, wobei in die OP- oder Untersuchungsleuchte (17) ein Monitor integriert ist.

16. OP- oder Untersuchungsleuchte (17) mit zumindest einem einen Leuchtenkörper (21) umfassenden Tragarm (18) nach einem der vorangehenden Ansprüche 11-15, **dadurch gekennzeichnet, dass** eine bidirektionale Übertragung patienten- und/oder therapiebezogener Daten zwischen der OP- oder Untersuchungsleuchte (17) und einem externen Computer sowie die Einbindung bildgebender Verfahren, beispielsweise zur Projektion und Visualisierung auf einem Patienten realisierbar ist.
